# EUROPÄISCHE PATENTSCHRIFT

(11) **EP 1 333 160 B1**
(45) Veröffentlichungstag und Bekanntmachung des Hinweises auf die Patenterteilung: **13.10.2004**
(21) Anmeldenummer: 02002214.1
(22) Anmeldetag: 30.01.2002
(51) Int. Cl.: F01M 11/03, B01D 35/027, B01D 29/01

(54) **Ölwanne mit integrierter Ölfiltereinheit**
Oil sump with integrated filter element
Carter d'huile ayant un filtre integré

(43) Veröffentlichungstag der Anmeldung: 06.08.2003
(73) Patentinhaber: IBS Filtran Kunststoff-/Metallerzeugnisse GmbH, 51589 Morsbach (DE)
(72) Erfinder: Beer, Markus, 51597 Morsbach (DE); Rosendahl, Marco, 51674 Wiehl (DE)
(74) Vertreter: Lang, Friedrich, Dipl.-Ing.

(56) Entgegenhaltungen:
- EP-A- 1 060 779
- DE-A- 10 008 692
- GB-A- 2 327 625
- US-A- 4 790 938
- US-A- 6 143 169
- US-B1- 6 187 185

## Beschreibung

Gegenstand der Erfindung ist eine Ölwanne für Motoren oder Getriebe mit integrierter Ölfiltereinheit, wobei ein Teil der Ölwanne den Boden der Ölfiltereinheit bildet.

Generell werden Ölfilter in Motoren und Getrieben zur Reinigung des für die Schmierung des Motors bzw. Getriebes verwendeten Öls eingesetzt. Ursprünglich erfolgte die Ölfiltrierung bei einem Motor oder Getriebe durch separat außerhalb sowie innerhalb der Ölwanne angeordnete Filter. Das zur Filtrierung erforderliche Filtermedium ist dabei im allgemeinen im Filtergehäuse auf verschiedene Art und Weise angeordnet. Da der zur Verfügung stehende Raum innerhalb des Motor /Getrieberaumes knapp bemessen ist, geht die Tendenz in neuerer Zeit dahin, bei Neuentwicklungen von Motoren und Getrieben raumeinnehmende Konstruktionen zu vermeiden und die Raumausnutzung durch Integrationzu optimieren.

Dies hat dazu geführt, dass mittlerweile Ölfilter Verwendung finden, die in die Ölwanne von Motoren oder Getrieben integriert sind. Dies ermöglicht eine sinnvolle Nutzung des zur Verfügung stehenden Raumes in der Ölwanne, da sie zur Aufnahme des nicht im Motor- oder Getriebekreislauf befindlichen Öls vorgesehen ist. Entsprechende Anordnungen von Ölfiltereinsätzen in einer Ölwanne sind beispielsweise beschrieben in DE 100 08 692.

Für eine störungsfreie Funktion des Ölfilters in der Ölwanne ist es unabdingbar, dass die Dichtheit der Verbindungsstelle von Filtereinheit und Ölwanne dauerhaft und auch über hohe Temperaturbereiche und Belastungsbereiche gewährleistet ist. Dabei muss man sich vergegenwärtigen, dass die Temperaturen im Kraftfahrzeug je nach geografischem Standort des Benutzers und Temperatur des Öls zwischen -40 und +160°C liegen können. Aufgrund dieser starken temperaturbedingten Belastungen verzieht sich die Filtereinheit häufig nach einiger Zeit des Gebrauchs. Dies kann unabhängig von der Dichtheit zu Problemen bei der Funktionalität der Filtereinheit führen, vor allem im Hinblick auf die dadurch möglicherweise beeinträchtigte Verbindung des Ölfilters zum Motor oder Getriebe.

Insbesondere die Verwendung verschiedener Materialien für Ölwanne und Filtereinsatz, wie beispielsweise Metall für Ölwannen und Kunststoff für Filtereinsätze, ruft aufgrund der unterschiedlichen physikalischen Eigenschaften dieser Materialien häufig bei der Zusammenfügung vor allem im Hinblick auf die Dichtheit Probleme hervor. Wegen der bisher erforderlichen Verklebung der beiden Halbschalen der Ölwanne verzögert sich die vom Kunden bevorzugte Lieferung des gesamten Ölfiltersystems durch lange Aushärtezeiten des Klebers.

Aktuelle Bestrebungen gehen dahin, insbesondere die Bauhöhen der Ölfiltereinheiten so zu verringern, um so eine tiefstmögliche Ansaugposition des Ölfilters zu ermöglichen. Dies zieht jedoch auch deutlich gesteigerte konstruktionsbedingte Anforderungen nach sich.

Die technische Aufgabe der vorliegenden Erfindung war es daher, eine Ölwanne für Motoren oder Getriebe, in der die Ölfiltereinheit integriert ist, bereitzustellen, die die oben genannten Nachteile vermeidet, speziell eine dauerhafte und störungsfreie Ölfiltrierung ermöglicht und auch bei größeren Temperaturschwankungen ausreichende und dauerhafte Dichtheit aufweist.

Diese technische Aufgabe wird gelöst durch eine Ölwanne mit integrierter Ölfiltereinheit, wobei ein Teil der Ölwanne den Boden der Ölfiltereinheit bildet, dergestalt, dass die Ölfiltereinheit mindestens mittels einer klebenden Komponente und einer oder mehreren Stanznieten auf der Ölwanne befestigt ist.

In einer bevorzugten Ausführungsform befindet sich zwischen der Ölfiltereinheit und der Ölwanne ein Dichtungselement.

Die Konstruktion kann so aussehen, dass entweder nur eine Dichtung eingelegt bzw. angespritzt wird und dann eine Vernietung stattfindet oder anstatt der Dichtung ein Kleber aufgebracht wird, der die Funktion der Dichtung übernimmt und gleichzeitig die Bauteile verbindet.

Die Ölwanne sowie die Filtereinheit können dabei aus allen denkbaren Materialien, die zum Stanznieten geeignet sind, gebildet werden. Diese umfassen metallische bzw. nichtmetallische Werkstoffe oder Verbundwerkstoffe, wie beispielsweise Metalle, Legierungen, Stähle oder Kunststoffe, die zudem, beispielweise mit anorganischen oder organischen Substanzen, beschichtet sein können. In einer bevorzugten Ausführungsform findet eine Ölwanne aus Metall, insbesondere aus Blech Aluminiumdruckguss oder Stahl, sowie eine Filtereinheit aus Kunststoff Verwendung.

Die Filtereinheit an sich umfasst ein oder mehrere Filtermedien, wie beispielsweise Teilsiebe, Papierfilter oder auch Polyesterfilterfilze, die je nach Material scheibenförmig, als Tasche geformt oder faltenförmig vorliegen, sowie einen Rahmen, der das Filtermedium einfasst und einen vorteilhafterweise an den Rahmen befestigten Deckel, der zum Beispiel geschweißt sein kann. Favorisiert wird zudem die Bildung des Rahmens der Filtereinheit durch Umspritzen des Filtermediums.

In einer bevorzugten Ausführungsform weist die Filtereinheit einen Befestigungsbereich auf, der der Befestigung der Filtereinheit an der Ölwanne dient. Dieser Befestigungsbereich stellt einen Bestandteil des Rahmens der Filtereinheit dar, ist derart ausgebildet, dass er zumindest stellenweise, ähnlich einem Fuß, parallel zum Ölwannenboden verläuft, und zeichnet sich vorteilhafterweise dadurch aus, dass er an der Unterseite, die auf der Ölwanne zu liegen kommt, eine Nut aufweist. Der derart gestaltete Rahmen der Filtereinheit ermöglicht eine Befestigung der Filtereinheit an dem Boden der Ölwanne durch Einbringung einer klebenden Komponente in oben beschriebene Nut. Der parallel zum Boden der Ölwanne verlaufende Befestigungsbereich sollte zudem eine Dicke aufweisen, die ein Fügen der Ölwanne mit Hilfe von Stanznieten ermöglicht.

Die Befestigung der Filtereinheit in der Ölwanne wird erleichtert, wenn die Ölwanne im Befestigungsbereich ebenfalls eine Nut aufweist, die optimalerweise etwas breiter ist als der parallel zum Boden der Ölwanne verlaufende Befestigungsbereich des Rahmens der Filtereinheit. Dies ermöglicht ein passgenaues Fixieren der Filtereinheit auf dem Boden der Ölwanne und verhindert, dass sich die Filtereinheit aufgrund der drastischen Gebrauchsbedingungen nach der Fixierung verzieht.

Um eine störungsfreie Ölfiltrierung zu ermöglichen, sollte eine dauerhafte und dichte Verbindung des Rahmens mit der Ölwanne geschaffen werden. Dazu wird bevorzugt ein Dichtungselement in die im Befestigungsbereich des Rahmens der Filtereinheit befindliche Nut eingebracht. Die Verwendung einer Dichtung, die gleichzeitig klebende Eigenschaften aufweist, hat sich dabei als besonders vorteilhaft erwiesen. Als Dichtungselement können die gängigen Materialien, wie beispielsweise Acrylatkautschuk (ACM), Ethylenacrylatelastomeren (AEM) oder Fluorkautschuk (FPM), Verwendung finden, während ein Zweikomponenten- oder ein Siliconkleber Beispiele für ein klebendes Dichtungsmaterial darstellen.

Da eine Fixierung der Filtereinheit auf der Ölwanne lediglich mittels Dichtung und Kleber, wie sie bisher erfolgt ist, vor allem aufgrund der starken Temperaturschwankungen, dazu geführt hat, dass nach einiger Zeit Undichtigkeiten aufgetreten sind und Dichtmasse bzw. Kleber sich verzogen haben, erfolgt bei der erfindungsgemäßen Ölwanne zusätzlich eine Fixierung des Rahmens auf der Ölwanne mittels Fügen unter Verwendung von Stanznieten, insbesondere Halbhohlnieten.

Das Fügen zweier oder mehrere Fügeteile mittels Halbhohlnieten ist bereits seit einigen Jahren bekannt und findet bereits Anwendung. So erfolgt in der Automobilindustrie der Rohbau der Aluminiumkarosserie von Kraftfahrzeugen mittlerweile bevorzugt durch Stanznieten. Wie beispielsweise in DE 44 31 769 und DE 197 01 150 beschrieben, basiert das Stanznieten mit Halbhohlnieten auf dem Einsatz plastisch verformbarer Hilfsfügeteile und ist charakterisiert durch das mittelbare nichtlösbare Verbinden von zwei oder mehreren Fügeteilen, insbesondere Blechteilen, ohne Vorlochoperation unter Verwendung eines Hilfsfügeteils, welches gleichzeitig als Schneidstempel fungiert. Der als Halbhohlniet ausgebildete Stanzniet mit einer als Schneidkante ausgebildeten Bohrungsansenkung durchstanzt dabei die oberen n-1 von n Fügeteilen, um sich dann im untersten Fügeteil durch Aufspreizen plastisch zu verformen. Die Festigkeit der Nietverbindung hängt dabei insbesondere von dem bei der Spreizung erzielten Hinterschnitt S_{H} ab.

Die Vorteile dieses Verfahrens liegen darin, dass keine Vorarbeiten, wie das Lochen der Fügeteile, vorgenommen werden müssen, im Gegensatz zu thermischen Verfahren kein Verzug auftritt, und dass das unterste Fügeteil, da es selber nicht durchstanzt wird, eine nichtbeschädigte Schutzschicht und damit eine weitgehend dichte Verbindung darstellt. Zudem sind Bedienungs- und Wartungsaufwand für den Stanznietprozess als gering zu bewerten.

Ein weiterer Vorzug dieses Verfahrens ist in der Möglichkeit zu sehen, in ihren physikalischen und Oberflächeneigenschaften völlig voneinander verschiedene Materialien problemlos und flüssigkeitsdicht miteinander zu verbinden. Eine Vorrichtung zur Durchführung des Stanznietprozesses ist beispielsweise in der Offenlegungsschrift DE 199 05 527 beschrieben.

Die Anwendung des Stanznietens erfolgt bei der vorliegenden erfindungsgemäßen Ölwanne optimalerweise nur in den kritischen Bereichen, insbesondere den Eckpunkten, ist aber prinzipiell im Hinblick auf die Anzahl der verwendeten Stanznieten nicht eingeschränkt. Durch die erfindungsgemäße Kombination aus Dichtungselement/Kleber und Stanznieten erhält man mit geringstmöglichem Aufwand eine dauerhafte und dichte Verbindung des Rahmens mit der Ölwanne ohne Gefahr eines Verziehens der Filtereinheit im Verlauf des Gebrauchs. Insbesondere durch Verwendung eines Dichtungsklebers kann die Anzahl der Nieten bei gleichzeitiger Gewährleistung der Dichtheit deutlich reduziert werden. Da in diesem Fall die Nieten nur noch eine Fixierung der Bauteile in der Trocknungsphase des Klebers darstellen, ist eine vollständige Trocknung und Aushärtung des Klebers vor der Auslieferung an den Kunden nicht mehr erforderlich. Die Ölwanne kann daher direkt nach dem Fügen an den Kunden ausgeliefert werden.

Dies ermöglicht nicht nur eine Systemzulieferung, die auch kurzfristig erfolgen kann, sondern ebenfalls eine sinnvolle Nutzung des während der Trocknung beanspruchten Raumes, der bisher aufgrund der notwendigen Trocknung vor Auslieferung in der Räumlichkeiten der Produktionsstätte anfiel.

Das Material der zu verwendenden Halbhohlnieten bestimmt sich im wesentlichen aus der Härte der zu fügenden Fügeteile. Bevorzugt finden Nieten aus Stahl Verwendung.

Einen weiteren Gegenstand der vorliegenden Erfindung stellt ein Verfahren zur Befestigung einer Ölfiltereinheit auf einer Ölwanne dar, welches die folgenden Schritte umfasst:
Einbringen einer Dichtung und eines Klebers zwischen die Ölfiltereinrichtung und die Ölwanne.
Fügen von Ölwanne und Filtereinrichtung einschließlich der dazwischen befindlichen Schicht mittels Stanznieten.

In einer bevorzugten Ausführungsform erfolgt das Einbringen der Dichtung lediglich durch Einlegen zwischen die Ölfiltereinheit und die Ölwanne, wobei die Dichtung selber oder Ölfiltereinheit und/oder Ölwanne zusätzlich mit einem Kleber versehen werden. Als Kleber finden dabei herkömmliche Substanzen wie Einoder Zwei-Komponenten Silicon- oder Polyurethankleber Verwendung. Als Dichtung können gängige Materialien, wie beispielsweise aus Acrylatkautschuk (ACM), Ethylenacrylatelastomeren (AEM) oder Fluorkautschuk (FPM) Verwendung finden.

In einer weiteren bevorzugten Ausführungsform wird die Dichtung zunächst an der Filtereinheit fixiert und zusammen mit dieser auf die Ölwanne gelegt. Es ist dabei besonders bevorzugt, die Dichtung durch Anspritzen an die Filtereinheit zu fixieren. Vorteilhafterweise finden dabei Materialien, wie beispielsweise aus Acrylatkautschuk (ACM), Ethylenacrylatelastomeren (AEM) oder Fluorkautschuk (FPM) Verwendung.

Bei einer dritten bevorzugten Ausführungsform erfolgt das Einbringen der Dichtung durch Einspritzen zwischen die Filtereinheit und die Ölwanne. Dabei werden vorteilhafterweise Dichtungskleber, wie Silicon- oder ZweikomponentenKleber verwendet. Es ist zweckmäßig, in die Nut einzuspritzen, die sich am parallel zur Ölwanne verlaufenden Befestigungsbereich des Rahmens befindet. Die erfindungsgemäße Ölwanne wird anhand der folgenden Figuren detailliert beschrieben, ohne die Erfindung jedoch auf diese zu beschränken.

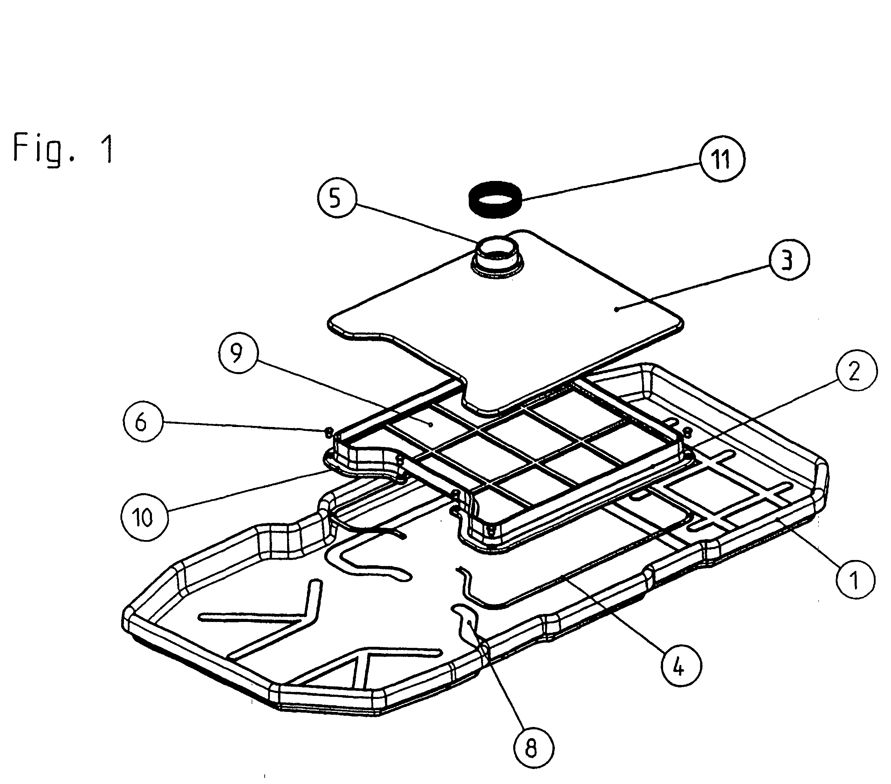

**Fig. 1** zeigt in schräger Aufsicht den schematischen Aufbau einer bevorzugten Ausführungsform der erfindungsgemäßen Ölwanne. **1** stellt dabei die eigentliche Ölwanne dar, die gleichzeitig auch den Boden der Ölfiltereinheit bildet. Die Filtereinheit setzt sich zusammen aus dem Rahmen **2** der Filtereinheit, der zudem einen zumindest stellenweise parallel zum Boden der Ölwanne verlaufenden Befestigungsbereich **10** aufweist, dem Filtermedium **9** und dem Deckel **3** der Filtereinheit. Die Bildung des Rahmens **2** der Filtereinheit erfolgt dabei durch Umspritzen des Filtermediums **9**. Der Deckel **3** der Filtereinheit wird zweckmäßigerweise während des Fertigungsprozesses auf das Bauteil Rahmen **2** aufgeschweißt.

Die ölwanne **1** weist bevorzugt eine Nut **8** auf, die der Form der Filtereinheit entspricht. Vorteilhafterweise wird in diese Nut **8** die Dichtung **4**, die sich zwischen der Ölwanne **1** und dem Rahmen **2** der Filtereinheit befindet, eingebracht. Die klebende Komponente, die den Rahmen **2** der Filtereinheit auf der Ölwanne fixieren soll, ist in dieser Abbildung nicht mit eingezeichnet. Zur zusätzlichen Fixierung der Filtereinheit dienen Stanznieten **6**.

Im ordnungsgemäßen Betrieb gelangt das Öl aus dem Motor- oder Getriebekreislauf in die Ölwanne **1**, fließt durch die Einlassöffnung **7** in das Innere der Filtereinheit unter das Filtermedium **9**, wird mittels einer Saugpumpe durch das Filtermedium **9** gesaugt und gelangt schließlich über die Auslassöffnung **5** zurück in den Kreislauf. An der Ansaugöffnung **5** ist ein Dichtring **11** vorgesehen.

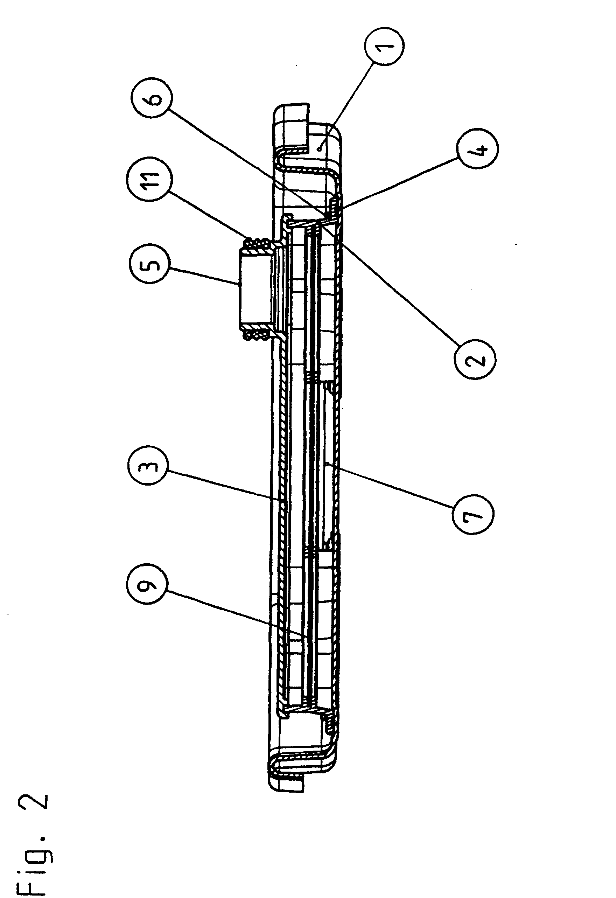

In **Fig. 2** ist ein Längsschnitt der bevorzugten Ausführungsform der erfindungsgemäßen Ölwanne dargestellt.

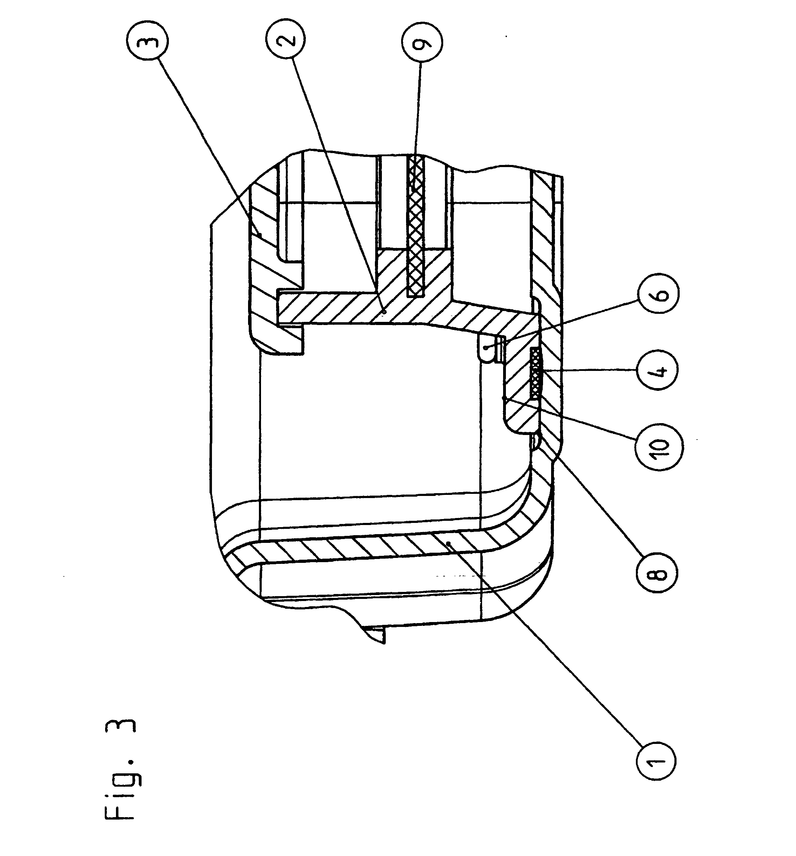

**Fig. 3** zeigt eine Vergrößerung aus **Fig. 2.** Es handelt sich dabei um einen Längsschnitt durch den Befestigungsbereich **10,** der überwiegend parallel zur Ölwanne **1** verläuft. Es ist verdeutlicht, dass die Ölwanne **1** ebenso wie der Befestigungsbereich **10** der Filtereinheit eine Nut **8** aufweist, wobei die Form der Nut **8** der Ölwanne **1** derart gestaltet ist, dass sie den Befestigungsbereich **10** der Filtereinheit umschließt.

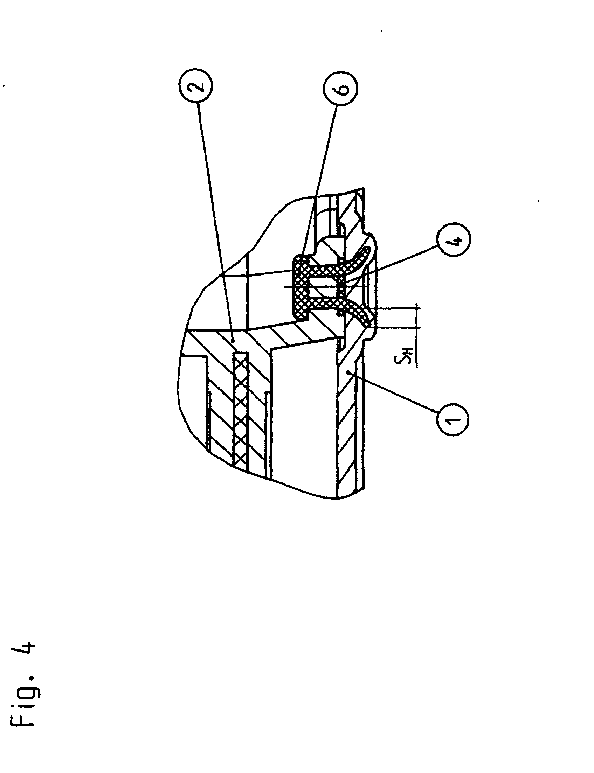

**Fig. 4** entspricht dem Schnitt in **Fig. 3,** mit dem Unterschied, dass dieser direkt durch den Stanzniet **6** verläuft. **Fig. 4** skizziert die Fügestelle nach erfolgter Fügung. Der bei der Spreizung des Halbhohlnietes im Verlauf des Stanzverfahrens gebildete Hinterschnitt ist als S_{H} bezeichnet. Dieser beeinflusst die Festigkeit sowie die Dichtheit der Fügung. Wie in **Fig. 4** verdeutlicht, umfasst das Fugen die Ölwanne **1**, den Befestigungsbereich **10** der Filtereinheit sowie die Dichtung **4**.

### Bezugszeichenliste

- 1: ölwanne
- 2: Rahmen der Filtereinheit
- 3: Deckel der Filtereinheit
- 4: Dichtung oder Kleber
- 5: Auslassöffnung
- 6: Nietverbindung
- 7: Einlassöffnung
- 8: Nut
- 9: Filtermedium
- 10: Befestigungsbereich des Rahmens der Filtereinheit
- 11: Dichtring

## Patentansprüche

1. Ölwanne mit integrierter Olfiltereinheit, wobei ein Teil der Ölwanne den Boden der Ölfiltereinheit bildet, **dadurch gekennzeichnet, dass** die Ölfiltereinheit mindestens mittels einer klebenden Komponente und einer oder mehreren Stanznieten **6** auf der Ölwanne **1** befestigt ist.

2. ölwanne nach Anspruch 1, **dadurch gekennzeichnet, dass** sich zwischen der Ölfiltereinheit und der Ölwanne **1** ein Dichtungselement **4** befindet.

3. Ölwanne nach Anspruch 1 oder 2, **dadurch gekennzeichnet, dass** die klebende Komponente gleichzeitig auch als Dichtungselement **4** fungiert.

4. Ölwanne nach den Ansprüchen 1 bis 3, **dadurch gekennzeichnet, dass** die Filtereinheit einen Rahmen **2**, der aus Kunststoff gefertigt ist, und das Filtermedium **9** umfasst.

5. ölwanne nach Anspruch 4, **dadurch gekennzeichnet, dass** der Rahmen der Filtereinheit einen Befestigungsbereich **10** aufweist, der der Befestigung der Filtereinheit an der Ölwanne **1** dient.

6. Ölwanne nach Anspruch 5, **dadurch gekennzeichnet, dass** der Befestigungsbereich **10** der Filtereinheit, der mit der Ölwanne **1** verbunden wird, eine Nut aufweist.

7. ölwanne nach den Ansprüchen 1 bis 6, **dadurch gekennzeichnet, dass** die ölwanne **1** eine Nut **8** aufweist.

8. ölwanne nach den Ansprüchen 1 bis 7, **dadurch gekennzeichnet, dass** die Nut **8** der Form der Filtereinheit entspricht.

9. Ölwanne nach den Ansprüchen 1 bis 8, **dadurch gekennzeichnet, dass** als Stanznieten **6** Halbhohlnieten Verwendung finden.

10. Ölwanne nach den Ansprüchen 1 bis 9, **dadurch gekennzeichnet, dass** die Ölwanne **1** mindestens ein Metall als Bestandteil aufweist.

11. Verfahren zur Befestigung einer Ölfiltereinheit auf einer Ölwanne **1** nach den Ansprüchen 1 bis 10 umfassend folgende Schritte:
Einbringen einer Dichtung **4** und eines Klebers zwischen die Ölfiltereinrichtung und die Ölwanne **1**.
Fügen von Ölwanne **1** und Filtereinrichtung einschließlich der dazwischen befindlichen Schichten mittels Stanznieten **6**.

12. Verfahren zur Befestigung einer Ölfiltereinheit auf einer Ölwanne **1** nach Anspruch 11, **dadurch gekennzeichnet, dass** die Dichtung **4** zwischen die Ölfiltereinheit und die Ölwanne 1 eingelegt wird.

13. Verfahren zur Befestigung einer Ölfiltereinheit auf einer Ölwanne **1** nach Anspruch 12, **dadurch gekennzeichnet, dass** die Dichtung **4** an der Filtereinheit fixiert wird.

14. Verfahren zur Befestigung einer Ölfiltereinheit auf einer Ölwanne **1** nach Anspruch 13, **dadurch gekennzeichnet, dass** die Fixierung der Dichtung **4** durch Anspritzen an die Filtereinheit erfolgt.

15. Verfahren zur Befestigung einer Ölfiltereinheit auf einer Ölwanne **1** nach Anspruch 11, **dadurch gekennzeichnet, dass** die Dichtung **4** zwischen die Filtereinheit und die Ölwanne **1** eingespritzt wird.

## Claims

1. An oil pan having an integrated oil filter unit, wherein part of the oil pan forms the bottom of the oil filter unit, **characterized in that** the oil filter unit is fastened to the oil pan **1** at least by means of an adhesive component and one or more punch rivets **6**.

2. The oil pan according to claim 1, **characterized in that** a sealing element **4** is situated between oil filter unit and oil pan **1**.

3. The oil pan according to claim 1 or 2, **characterized in that** the adhesive component functions as sealing element **4** at the same time.

4. The oil pan according to claims 1 to 3, **characterized in that** the filter unit comprises a frame **2** made of plastic and a filter medium **9**.

5. The oil pan according to claim 4, **characterized in that** the frame of the filter unit has a fastening area **10** which is used to fasten the filter unit to the oil pan **1**.

6. The oil pan according to claim 5, **characterized in that** the filter unit fastening area **10** to be joined to the oil pan **1** has a groove.

7. The oil pan according to claims 1 to 6, **characterized in that** the oil pan **1** has a groove **8**.

8. The oil pan according to claims 1 to 7, **characterized in that** the groove **8** corresponds in shape to the filter unit.

9. The oil pan according to claims 1 to 8, **characterized in that** semi-tubular rivets are used as punch rivets **6**.

10. The oil pan according to claims 1 to 9, **characterized in that** the oil pan **1** has at least one metal as component.

11. A method of fastening an oil filter unit on the oil pan **1** according to claims 1 to 10, said method comprising the steps of:
- introducing a seal **4** and an adhesive between the oil filter means and the oil pan **1**;
- joining the oil pan **1** and the filter means, including the layers therebetween, by means of punch rivets **6**.

12. The method of fastening an oil filter unit on an oil pan **1** according to claim 11, **characterized in that** the seal **4** is inserted between the oil filter unit and the oil pan **1**.

13. The method of fastening an oil filter unit on an oil pan **1** according to claim 12, **characterized in that** the seal **4** is fixed on the filter unit.

14. The method of fastening an oil filter unit on an oil pan **1** according to claim 13, **characterized in that** the seal **4** is fixed by extruding onto the filter unit.

15. The method of fastening an oil filter unit on an oil pan **1** according to claim 11, **characterized in that** the seal **4** is injected between the filter unit and the oil pan **1**.

## Revendications

1. Carter à huile avec une unité de filtration d'huile intégrée, une partie du carter à huile formant le fond de l'unité de filtration d'huile, ***caractérisé en ce que*** l'unité de filtration d'huile est fixée au moins au moyen d'un composant adhésif et d'un ou plusieurs rivets estampés 6 sur le carter 1 à huile.

2. Carter à huile selon la revendication 1, ***caractérisé en ce qu***'un élément d'étanchéité 4 se trouve entre l'unité de filtration d'huile et le carter 1 à huile.

3. Carter à huile selon la revendication 1 ou 2, ***caractérisé en ce que*** le composant adhésif sert simultanément d'élément d'étanchéité 4.

4. Carter à huile selon l'une quelconque des revendications 1 à 3, ***caractérisé en ce que*** l'unité de filtration comprend un cadre 2, qui est fabriqué en matière plastique, et le milieu 9 filtrant.

5. Carter à huile selon la revendication 4, ***caractérisé en ce que*** le cadre de l'unité de filtration comporte une zone de fixation 10 qui sert à la fixation de l'unité de filtration sur le carter 1 à huile.

6. Carter à huile selon la revendication 5, ***caractérisé en ce que*** la zone de fixation 10 de l'unité de filtration, qui est reliée au carter 1 à huile, présente une rainure.

7. Carter à huile selon l'une quelconque des revendications 1 à 6, ***caractérisé en ce que*** le carter 1 à huile comporte une rainure 8.

8. Carter à huile selon l'une quelconque des revendications 1 à 7, ***caractérisé en ce que*** la rainure 8 correspond à la forme de l'unité de filtration.

9. Carter à huile selon l'une quelconque des revendications 1 à 8, ***caractérisé en ce que*** l'on utilise comme rivets estampés 6 des rivets semi-creux.

10. Carter à huile selon l'une quelconque des revendications 1 à 9, ***caractérisé en ce que*** le carter 1 à huile comporte au moins un métal comme constituant.

11. Procédé de fixation d'une unité de filtration d'huile sur un carter 1 à huile selon les revendications 1 à 10, comprenant les étapes suivantes :
mise en place d'un joint 4 et d'un adhésif entre le dispositif de filtration d'huile et le carter 1 à huile,
assemblage du carter à huile 1 et du dispositif de filtration, y compris les couches placées entre eux, au moyen de rivets estampés 6.

12. Procédé de fixation d'une unité de filtration d'huile sur un carter 1 à huile selon la revendication 11, ***caractérisé en ce que*** le joint 4 est inséré entre l'unité de filtration et le carter 1 à huile.

13. Procédé de fixation d'une unité de filtration d'huile sur un carter 1 à huile selon la revendication 12, ***caractérisé en ce que*** le joint 4 est fixé sur l'unité de filtration.

14. Procédé de fixation d'une unité de filtration d'huile sur un carter 1 à huile selon la revendication 13, ***caractérisé en ce que*** la fixation du joint 4 s'effectue par injection sur l'unité de filtration.

15. Procédé de fixation d'une unité de filtration d'huile sur un carter 1 à huile selon la revendication 11, ***caractérisé en ce que*** le joint 4 est injecté entre l'unité de filtration et le carter 1 à huile.
